# EUROPÄISCHE PATENTANMELDUNG

(11) **EP 2 485 353 A1**
(43) Veröffentlichungstag der Anmeldung: **08.08.2012**
(21) Anmeldenummer: 11153127.3
(22) Anmeldetag: 03.02.2011
(51) Int. Cl.: H02G 5/10, H01H 1/62

(54) **Elektrische Verbindungsanordnung für ein Stromverteilungssystem einer Hoch- und/oder Mittelspannungsanlage**

(71) Anmelder: ABB Technology AG, 8050 Zürich (CH)
(72) Erfinder: Sologuren-Sanchez, Diego, 5430, Wettingen (CH); Erford, Tobias, 8050, Zürich (CH)
(74) Vertreter: ABB Patent Attorneys

(57) **Zusammenfassung**

Die Erfindung betrifft eine elektrische Verbindungsanordnung für ein Stromverteilungssystem einer Hoch- und/oder Mittelspannungsanlage, umfassend einen ersten Leiter (10, 110, 210, 310), einen zweiten Leiter (20, 120, 220, 320), und mindestens ein Kontaktelement (30, 30a, 30b, 130a, 130b, 330) zum Verbinden des ersten Leiters mit dem zweiten Leiter, wobei das mindestens eine Kontaktelement jeweils eine erste Kontaktfläche (32a, 32b) aufweist, die in Kontakt mit dem ersten Leiter (10, 110, 210, 310) bringbar ist oder steht, um einen Stromfluss zwischen dem ersten Leiter und dem zweiten Leiter zu ermöglichen, wobei der erste Leiter mindestens ein Stromvergleichmäßigungsmittel (14a, 14b, 114b, 214a, 214b, 314) aufweist, das derart geformt ist, dass eine Stromdichte durch das Kontaktelement entlang der ersten Kontaktfläche (32a, 32b) vergleichmäßigt ist.

## Beschreibung

Die Erfindung betrifft eine elektrische Verbindungsanordnung für ein Stromverteilungssystem einer Hoch- und/oder Mittelspannungsanlage umfassend einen ersten Leiter, einen zweiten Leiter und mindestens ein Kontaktelement zum Verbinden des ersten Leiters mit dem zweiten Leiter.

Aus DE 4323369 A1 ist ein Schaltfeld für eine Mittelspannungsanlage bekannt, das einen Erdungsschalter aufweist, der mit einem Abgangsabschlusselement zusammenwirkt.

Ferner sind Erdschalter bekannt, bei denen über Lamellen und ein Kontaktmesser eine Verbindung eines Nominalleiters mit der Masse oder Erdpotential gewährleistet wird. Im Falle eines Stromflusses besteht jedoch die Gefahr, dass einige Lamellen und der gesamte Schalter durch den Stromfluss zerstört werden, so dass eine Erdung nicht mehr gewährleistet ist. Dies kann zu einer Lebensgefahr für einen Techniker, der an der Hoch- oder Mittelspannungsanlage arbeitet, führen.

Beispielsweise kann in dem Erdschalter mit einem beweglichen Kontakt nach Art eines Kontaktmessers, bei dem der Erdschlussstrom vom Leiter über das Kontaktmesser in einen Winkel erfolgt, im Allgemeinen in Folge der Induktion der Strom über eine Kontaktfläche zwischen Lamellen und Kontaktmesser nicht gleichmäßig erfolgen. Bei einem Kurzschlussstrom über dieses Kontaktsystem kann die Stromdichte über einen kleinen Teil der Kontaktfläche so hoch werden, dass das Kontaktsystem dort überhitzt wird und schmilzt. In Folge kann das komplette Kontaktsystem zerstört werden. Jedoch kann aufgrund der durch Induktion beeinflussten Stromverteilung durch eine Vergrößerung der Kontaktfläche durch Verbreiterung des Kontaktmessers keine Verbesserung des Verhaltens erreicht werden.

Aufgabe der Erfindung ist es daher, die Nachteile des Standes der Technik zu überwinden, insbesondere eine elektrische Verbindungsanordnung bereitzustellen, bei der ein Übergang zwischen einem ersten Leiter und einem zweiten Leiter derart bewerkstelligt wird, dass eine Zerstörung oder Verformung durch Stromfluss vermieden wird.

Diese Aufgabe wird durch eine elektrische Verbindungsanordnung für ein Stromverteilungssystem einer Hoch- und/oder Mittelspannungsanlage gemäß Anspruch 1 gelöst. Die elektrische Verbindungsanordnung umfasst: einen ersten Leiter, einen zweiten Leiter, und mindestens ein Kontaktelement zum Verbinden des ersten Leiters mit dem zweiten Leiter, wobei das mindestens eine Kontaktelement jeweils eine erste Kontaktfläche aufweist, die in Kontakt mit dem ersten Leiter bringbar ist oder steht, um einen Stromfluss zwischen dem ersten Leiter und dem zweiten Leiter zu ermöglichen, wobei der erste Leiter mindestens ein Stromvergleichmäßigungsmittel aufweist, das derart ausgebildet ist, dass die Stromverteilung beim Stromfluss in einem Querschnitt der elektrischen Verbindungsanordnung vergleichmäßigt ist, so dass die Stromverteilung keine kritische Stromdichtespitze aufweist. Unter dem Begriff "vergleichmäßigt" wird verstanden, dass ein Strom durch das Kontaktelement entlang der ersten Kontaktfläche im Betrieb der elektrischen Verbindungsanordnung derart verteilt ist, dass keine kritischen Stromdichtespitzen auftreten. Als kritische Stromspitzen werden Werte von Stromdichten erachtet, welche Leiterteile lokal derart übermäßig erwärmen können, so dass lokal eine plastische Verformung oder sogar ein Schmelzen von Leiter- oder Kontaktteilen herbeigeführt wird. Je nach geplantem Einsatz der elektrischen Verbindungsanordnung kann es sich bei den kritischen Stromdichtespitzen um Stromdichtespitzen im Nominalbetrieb, beispielsweise bei einer Ausführungsform als Stromschiene, oder um Stromdichtebetrieb in einem Schutzbetrieb handeln, beispielsweise bei Ausführungsformen der elektrischen Verbindungsanordnung als Erdschalter oder dergleichen.

Der Erfindung liegt die Erkenntnis zugrunde, dass in einem Übergang zwischen einem ersten Leiter und einem zweiten Leiter, wie beispielsweise einem Erdschalter mit einem beweglichen Kontakt nach Art eines Kontaktmessers oder Schaltelements, infolge von Induktionseffekten der Strom ungleichmäßig über die Kontaktfläche verteilt ist. Durch Stromvergleichmäßigungsmittel oder Mittel zur lokalen Widerstandserhöhung gemäß Ausführungsbeispielen der Erfindung kann der Stromfluss in dem ersten Leiter derart beeinflusst bzw. gesteuert werden, dass die Stromdichte entlang der Kontaktfläche vergleichmäßigt ist. Die Lösung kann beispielsweise durch eine Erzwingung eines bestimmten Strompfades durch die Stromvergleichmäßigungsmittel, beispielsweise in Form eines Einschnitts, im ersten Leiter, wie beispielsweise einem Kontaktelement eines Erdschalters, quer zur Stromflussrichtung kurz hinter bzw. bei der Kontaktfläche erreicht werden. Dadurch wird eine gleichmäßigere Verteilung des Stroms über die Kontaktfläche erzielt, und die höchste Stromdichte bzw. lokale Stromdichtespitzen werden deutlich verringert. Damit kann das Kontaktsystem insgesamt höher belastet werden. Folglich kann die erfindungsgemäße Verbindungsanordnung bei sonst gleichen Abmaßen einen höheren Strom, insbesondere Kurzschlussstrom, und/oder längere Stromflussdauer verkraften. Abstrakt ausgedrückt sind die bzw. ist das Stromvergleichmäßigungsmittel gemäß Ausführungsbeispielen der Erfindung eine lokal (in Bezug auf die Längsachse des Leiters) begrenzte Verringerung der Querschnittsfläche des ersten Leiters, die in der Nähe bzw. bei der Kontaktfläche angeordnet ist/sind. Diese Verringerung kann durch eine Vielzahl von Mitteln erreicht werden, die sich auch untereinander kombinieren lassen. Als nicht-limitierende Aufzählung seien hier genannt: ein Schlitz, eine Nut, eine Perforation, eine Bohrung, ein Loch, und eine Taillierung.

In einer Ausführungsform kann das Stromvergleichmäßigungsmittel, das eine Längserstreckung aufweist, derart angeordnet sein, dass die Längserstreckung des Stromvergleichmäßigungsmittels im Wesentlichen quer zur Stromflussrichtung angeordnet ist.

In einer Ausführungsform wird unter Hochspannung insbesondere eine Spannung von über 30kV, insbesondere über 50kV verstanden. Unter einer Mittelspannung wird insbesondere eine Spannung zwischen 1kV und 50kV Volt, insbesondere zwischen 3kV und 30kV Volt verstanden.

Dabei kann in einer Ausführungsform sich die vergleichmäßigte Stromdichte an jeder beliebigen Stelle entlang der Kontaktfläche um weniger als den Faktor 10, insbesondere weniger als den Faktor 5, beispielsweise weniger als den Faktor 3, von einer mittleren Stromdichte entlang der Kontaktfläche unterscheiden, insbesondere parallel zur Längsachse der Kontaktfläche, insbesondere bei einem Betriebsstrom von mindestens 1000 Ampere, insbesondere mindestens 3000 Ampere, und/oder bei einem Kurzschlussstrom von mindestens 10kA, insbesondere von mindestens 15kA. Dabei wirken Betriebsströme beispielsweise in Schaltstrecken von Trennern auf Dauer erwärmend. Hingegen wirken Kurzschlussströme wegen der viel höheren Stärke im Sekundenbereich. Mit anderen Worten fließen Kurzschlussströme nur im Fehlerfall.

In einer Ausführungsform ist orthogonal zur Stromflussrichtung und/oder im Wesentlichen parallel zur Längsachse der Kontaktfläche der Leiterquerschnitt des ersten Leiters zur Vergleichmäßigung des Stromflusses geringer als die Ausdehnung der Kontaktfläche. Bei einem Flachleiter, der eine breite Seite und eine schmale Seite aufweist, kann der Leiterquerschnitt parallel zur breiten Seite kürzer als die Ausdehnung der Kontaktfläche sein.

Beispielsweise kann in einer Ausführungsform das mindestens eine Stromvergleichmäßigungsmittel ein Schlitz, eine Nut, eine Perforation, und/oder ein Loch sein, wobei das mindestens eine Stromvergleichmäßigungsmittel, insbesondere dessen Längsachse, im Wesentlichen quer zur Stromflussrichtung im ersten Leiter angeordnet ist. Ferner kann eine Reihe von Löchern in Bezug auf die Ausrichtung, beziehungsweise die Längsachse des Stromvergleichmäßigungsmittels, wie ein durchgehender Schlitz und/oder eine Nut betrachtet werden.

In einer Ausführungsform weist der erste Leiter mindestens eine zweite Kontaktfläche auf, die jeweils in Kontakt mit der mindestens einen ersten Kontaktfläche bringbar ist oder steht, wobei das mindestens eine Stromvergleichmäßigungsmittel in einer Wirkentfernung zu der zweiten Kontaktfläche angeordnet ist, die eine Veränderung der Stromdichte entlang der Kontaktfläche, insbesondere in Richtung der Längsachse der Kontaktfläche bewirkt, wobei insbesondere die Wirkentfernung weniger als 25mm, insbesondere weniger als 10mm beträgt. Dem Fachmann ist ohne weiteres verständlich, dass die optimale Wirkentfernung des Stromvergleichmäßigungsmittels von der oder den Kontaktflächen in der Praxis von einer Vielzahl von Faktoren beeinflusst wird. Dazu gehören vor allem die Geometrie und Abmaße der Anordnung sowie die zu erwartenden Ströme. Eine optimierte Anordnung bzw. eine Berechnung der optimalen Wirkentfernung kann daher mittels Auslegungsberechnungen oder experimentell ermittelt werden, z.B. mit Simulationsprogrammen. Die angegebenen Werte sind als nicht-limitierende Beispielwerte zu sehen.

Eine Ausführungsform kann dadurch gekennzeichnet sein, dass der erste Leiter mindestens eine zweite Kontaktfläche aufweist, die jeweils in Kontakt mit der mindestens einen ersten Kontaktfläche bringbar ist oder steht, wobei die mindestens eine zweite Kontaktfläche eine Längserstreckung aufweist, wobei das mindestens eine Stromvergleichmäßigungsmittel parallel zur Längsachse der mindestens einen zweiten Kontaktfläche angeordnet ist.

In einer Ausführungsform kann in Richtung der Längsachse der mindestens einen zweiten Kontaktfläche das mindestens eine Stromvergleichmäßigungsmittel eine Länge von mindestens 10% der Längserstreckung der jeweiligen mindestens einen Kontaktfläche aufweist, insbesondere mehr als 30% der Längserstreckung aufweisen.

Dabei kann in einer Ausführungsform die mindestens eine erste und/oder zweite Kontaktfläche mindestens ein Seitenverhältnis von 3:1, insbesondere mindestens ein Seitenverhältnis von 6:1 aufweisen. Die Kontaktfläche kann beispielsweise auf einer breiten Seite eines Flachleiters angeordnet sein und/oder eine im Wesentlichen rechteckige Form aufweisen, die zwei kurze und zwei lange Kante umfasst. Dabei ist die Längsachse der Kontaktfläche im Wesentlichen parallel zur langen Kante. In einer Ausführungsform, die mit anderen Ausführungsformen kombiniert werden kann, hat der Flachleiter eine Ausführungsform im Querschnitt ein Seitenverhältnis zwischen 5 und 50, insbesondere 7 und 25, vorzugsweise zwischen der breiten Seite und der schmalen Seite des Flachleiters.

Beispielsweise kann eine Ausführungsform dadurch gekennzeichnet sein, dass das mindestens eine Kontaktelement eine Vielzahl von aneinander angrenzenden Einzelkontakten aufweist, insbesondere in Richtung der Längsachse der ersten und/oder zweiten Kontaktfläche.

Beispielsweise kann in einer Ausführungsform ein Strompfad von dem ersten Leiter in das mindestens eine Kontaktelement in einem Winkel erfolgt, wobei der Winkel zwischen dem Strompfad im ersten Leiter und dem Strompfad im mindestens einen Kontaktelement jeweils zwischen 50 und 130 Grad, insbesondere zwischen 55 und 115 Grad liegt, beispielsweise zwischen 80 und 100 Grad liegt.

In einer Ausführungsform kann das mindestens eine Kontaktelement jeweils eine dritte Kontaktfläche aufweisen, die in Kontakt mit dem zweiten Leiter bringbar ist oder steht, um einen Stromfluss zwischen dem ersten Leiter und dem zweiten Leiter zu ermöglichen, wobei der zweite Leiter mindestens ein Stromvergleichmäßigungsmittel aufweist, das derart geformt ist, dass eine Stromdichte durch das Kontaktelement entlang der dritten Kontaktfläche vergleichmäßigt ist, wobei das Stromvergleichmäßigungsmittel im zweiten Leiter insbesondere gemäß dem Stromverteilungsmittel im ersten Leiter nach einer der Ausführungsformen in der Offenbarung ausgeführt ist.

Eine Ausführungsform kann dadurch gekennzeichnet sein, dass der erste Leiter und/oder der zweite Leiter ein Flachleiter ist. Dabei weist der Flachleiter eine breite Seite und eine schmale Seite auf, insbesondere in Richtung des Stromflusses betrachtet.

In einer Ausführungsform kann die elektrische Verbindungsanordnung ein schaltendes Element sein, derart, dass eine elektrische Verbindung zwischen dem ersten Leiter und dem zweiten Leiter unterbrechbar ist.

In einer Ausführungsform kann der erste Leiter zwischen einer ersten Position, in der er nicht in elektrischer Verbindung mit dem zweiten Leiter steht, und einer zweiten Position, in der er über das Kontaktelement mit dem zweiten Leiter in elektrischer Verbindung steht, bewegbar sein. Beispielsweise kann das schaltende Element ein Erdschalter sein.

Eine Ausführungsform kann dadurch gekennzeichnet sein, dass der erste Leiter, der zweite Leiter, und das mindestens eine Kontaktelement in einem Gehäuse, insbesondere einem leitendem Gehäuse, angeordnet sind, das ein Innenvolumen bereitstellt, das insbesondere mit einem Isoliergas befüllbar ist.

Weitere Merkmale und Vorteile der Erfindung ergeben sich aus der nachstehenden Beschreibung, in der mehrere Ausführungsbeispiele der Erfindung anhand schematischer Zeichnungen im Einzelnen erläutert werden. Dabei zeigt:
Fig. 1 einen Längsschnitt einer elektrischen Verbindungsanordnung;
Fig. 2 ein Leiter einer elektrischen Verbindungsanordnung gemäß der Ausführungsform aus Fig. 1;
Fig. 3 Kontaktelemente einer elektrischen Verbindungsanordnung gemäß Fig. 1;
Fig. 4 einen Querschnitt orthogonal zur Axialrichtung eines Nominalleiters gemäß der Ausführungsform von Fig. 2;
Fig. 5 eine schematische Ansicht eines Querschnitts orthogonal zur Längsachse eines Nominalleiters einer weiteren Ausführungsform einer elektrischen Verbindungsanordnung;
Fig. 6 eine vergrößerte Ansicht eines Kontaktelements einer Ausführungsform;
Fig. 7 eine Querschnittsansicht entlang einer Stromflussrichtung von einer elektrischen Verbindungsanordnung gemäß einer weiteren Ausführungsform;
Fig. 8 eine Draufsicht eines Leiters der Verbindungsanordnung von Fig. 7; und
Fig. 9 einen Querschnitt eines Schaltanlagensegments umfassend eine elektrische Verbindungsanordnung gemäß einer Ausführungsform.

Bei den im Folgenden beschriebenen Ausführungsformen sind einzelne Aspekte und Merkmale modular mit Merkmalen anderer Ausführungsformen kombinierbar. Durch eine solche Kombination können wiederum weitere Ausführungsformen erhalten werden, die ebenfalls als zur vorliegenden Offenbarung zugehörig anzusehen sind.

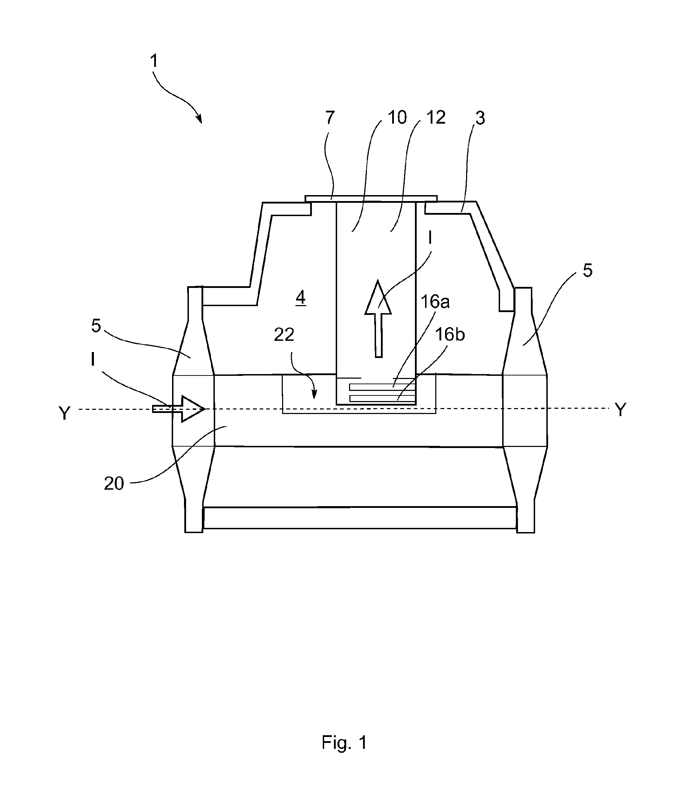

Die in Bezug auf Fig. 1 bis 6 gezeigten Ausführungsformen der Erfindung zeigen eine elektrische Verbindungsanordnung einer gasisolierten Schaltanlage für eine Hoch- und/oder

Mittelspannung. Unter einer solchen gasisolierten Schaltanlage wird dabei ein Schaltfeld verstanden. Die Erfindung kann jedoch auch zum Beispiel bei einem Erdschalter mit einem Kontaktmesser oder Schaltelement, einem Trennschalter für Leistungsschalter, und/oder einem Vakuumschalter angewendet werden.

Im Folgenden wird zunächst eine elektrische Verbindungsanordnung für eine einzige Phase beschrieben. Typischerweise können an drei Phasen jeweils eine zugehörige elektrische Verbindungsanordnung vorhanden sein.

Fig. 1 zeigt einen Querschnitt in Längsrichtung eines zweiten Leiters oder Nominalleiters 20 der elektrischen Verbindungsanordnung. Die elektrische Verbindungsanordnung 1 umfasst ein Gehäuse 3, in dem ein erster Leiter 10 und der zweite Leiter 20 angeordnet sind. Ferner weist das Gehäuse 3 einen Innenraum 4 auf, der beispielsweise mit einem isolierenden Gas, typischerweise SF₆ unter einen Druck von typischerweise 3 bis 6 bar gefüllt ist. Der zweite Leiter 20 erstreckt sich entlang einer Längsachse Y. Der Innenraum 4 ist in Richtung der Längsachse Y durch Isolatoren 5, beispielsweise Schottisolatoren, abgegrenzt. Ferner kann der Gasraum, beziehungsweise das Innere des Gehäuses 3, auch einen weiteren Nominalleier aufweisen, beispielsweise im Fall einer Abzweigung oder einer mehrphasig gekapselten Gasisolierten Schaltanlage (GIS). Das Gehäuse 3 umfasst einen Anschluss 7, der mit der Erde oder Masse verbindbar ist und im Betrieb verbunden ist im Falle der Verwendung der elektrischen Verbindungsanordnung als Erdschalter.

Die elektrische Verbindungsanordnung umfasst einen ersten Leiter 10, der im Falle einer Verwendung als Schalter hin- und her bewegbar angeordnet ist, und so zeitweise eine elektrische Verbindung zwischen dem Anschluss 7 und dem zweiten Leiter oder Nominalleiter 20 herstellen kann. In dem Fall kann der erste Leiter 10 ein Schaltelement sein. Der erste Leiter 10 ist ein Flachleiter, der sich im Wesentlichen radial von der Längsachse Y des zweiten Leiters 20 aus erstreckt. Der erste Leiter 10 weist zwei breite Seiten 12 und zwei schmale Seiten 13 auf, wobei die schmalen Seiten schmaler als die breiten Seiten sind. Dabei werden die Dimension der schmalen und die breiten Seiten jeweils in einem Querschnitt orthogonal zur Stromrichtung betrachtet. Die breite Seite 12 ist im Wesentlichen parallel zur Längsachse Y angeordnet.

Ferner ist in Fig. 1 ein Strom I eingezeichnet. Der Strom I fließt über den zweiten Leiter 20 und in Fig. 1 nicht gezeigtes Kontaktelemente 32a, 32b durch den ersten Leiter 10 zu dem Anschluss 7. Dabei wechselt die Stromflussrichtung mehrfach um 90 Grad, beispielsweise zwischen dem zweiten Leiter 20 und den Kontaktelementen 32a, 32b und den Kontaktelementen 32a, 32b und dem ersten Leiter 10.

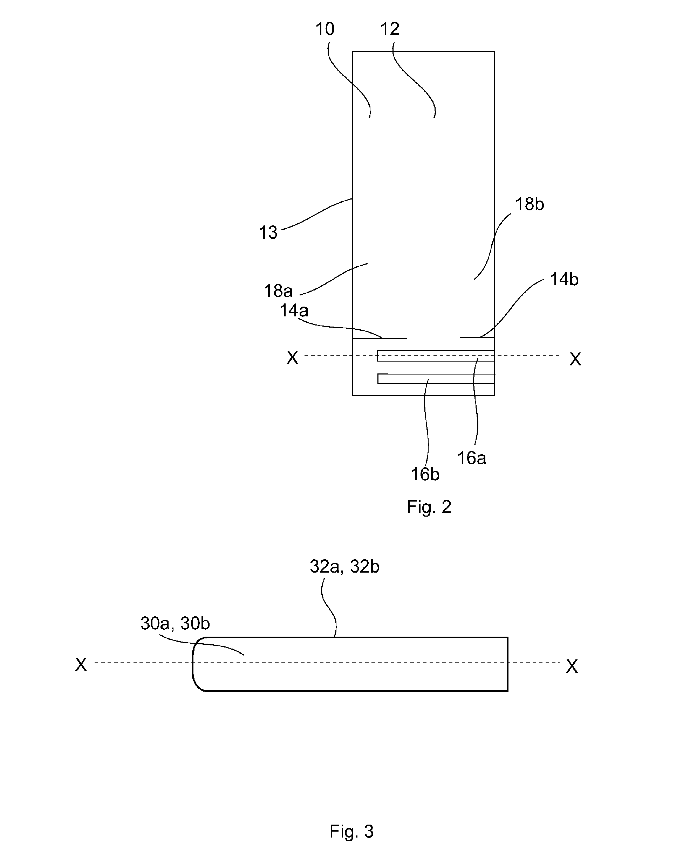

In Fig. 2 ist eine Seitenansicht des ersten Leiters 10 gezeigt. Der erste Leiter weist ein erstes Ende, das mit dem Anschluss 7 in Verbindung steht, und ein zweites, dem ersten Leiter zugewandtes Ende auf, an dem Kontaktelemente 32a, 32b in Vertiefungen befestigt werden können. Die Vertiefungen können gleichzeitig jeweils eine Kontaktfläche 16a, 16b zwischen den Kontaktelementen 32a, 32b und dem ersten Leiter 10 bereitstellen. Im Falle eines Stromflusses fließt somit der Strom von der Kontaktfläche 16a, 16b in Richtung des ersten Endes. Die Kontaktflächen 16a, 16b weisen jeweils eine Längsachse X auf, die im Wesentlichen parallel zu der Längsachse Y des zweiten Leiters 20 angeordnet ist. Zwei Schlitze 14a, 14b zur Stromvergleichmäßigung sind im Wesentlichen senkrecht zur Stromrichtung bei den Schlitzen und in der Ausführungsform von Fig. 2 auch parallel zur Längsachse X der Kontaktfläche 16a, 16b angeordnet. Die zwei Schlitze erstrecken sich von den schmalen Seiten 13 des ersten Leiters 10 jeweils in Richtung der Mitte des ersten Leiters 10. Dabei sind die Schlitze 14a, 14b nahe an den Kontaktflächen 16a, 16b angeordnet, sodass eine Vergleichmäßigung der Stromdichte entlang der Kontaktfläche 16a ermöglicht wird, und auch der Stromfluss durch die weiter von den Schlitzen 14a, 14b entfernte Kontaktfläche 16b im Vergleich zu einer elektrischen Verbindungsanordnung ohne Schlitze 14a, 14b größer und entlang der Längsachse X der Kontaktfläche vergleichmäßigt ist. Mit anderen Worten wird der Leiterquerschnitt des ersten Leiters 10 gezielt verringert. Um die Leitfähigkeit zu verändern oder den Widerstand gezielt zu erhöhen, können nicht nur ein oder mehrere Schlitze in dem ersten Leiter 10 angeordnet werden, sondern es kann beispielsweise auch eine oder mehrere Nuten gefräst werden. In einer anderen Ausführungsform können eine Vielzahl von Löchern in einer Reihe angeordnet werden, insbesondere in einer linearen Reihe. Um besonders effektiv den Strom zu an den Kontaktflächen zu vergleichmäßigen, ist eine Längsachse X der Schlitze und/oder Nuten typischerweise im Wesentlichen quer zur Stromrichtung angeordnet. "Quer" ist hier so zu verstehen, dass eine Längsausdehnung der Nuten oder Schlitze einen Winkel von mehr als 70°, typischer mehr als 80°, noch typischer mehr als 85° mit einer Längsachse des Leiters einnimmt.

Beispielsweise weist in Fig. 2 der Schlitz 14a eine Länge von 30% bis 50% der Gesamtbreite der des ersten Leiters 10 an der Stelle auf, wobei die Breite in Richtung der Längsachse X der Kontaktflächen und/oder orthogonal zur Stromrichtung bei den Schlitzen 14a, 14b gemessen wird. Der zweite Schlitz 14b weist in einer Ausführungsform eine Länge zwischen 10% und 30% der Breite des ersten Leiters in Richtung der Längsachse X der Kontaktfläche 16a, 16b und/oder orthogonal zur Stromrichtung bei den Schlitzen auf. Die Schlitzlänge kann auf den zu erwartenden Strom angepasst werden. Beispielsweise kann die Schlitzlänge der Schlitze 14a, 14b davon abhängen, ob der Strom von rechts oder von links kommend in Fig. 1 von dem zweiten Leiter 20 in den ersten Leiter fließt. Ferner kann die Schlitzlänge davon abhängen, ob der zweite Leiter sich beispielsweise nicht orthogonal, sondern schräg von der Längsachse Y des ersten Leiter sich aus erstreckt, da die Induktion von Strömen dann unterschiedlich sein kann, je nachdem, ob der Strom von rechts oder links kommend in den zweiten Leiter fließt..

In dem vorliegenden Fall kann der Schlitz in Bezug auf die Längachse X der Kontaktfläche 16a bezogen werden, da der Stromfluss durch das Schaltelement 10 im Bereich der Schlitze im Wesentlichen senkrecht zur Längsachse X steht. Zwischen dem ersten Schlitz 14a und dem zweiten Schlitz 14b weist der erste Leiter 10 einen Leiterquerschnitt von ca. 30% bis 50%, insbesondere 40% der Gesamtbreite in Längsachse X der Kontaktfläche 16a auf.

Durch die Schlitze 14a, 14b werden jeweils Bereiche 18a, 18b des ersten Leiters 10 bereitgestellt, in denen der Stromfluss wesentlich geringer ist als im Zentrum in Bezug auf eine Richtung, die orthogonal zur Stromflussrichtung ist. Dadurch, dass in den Bereichen 18a, 18b, die beispielsweise jeweils zwischen 2% und 15% der Oberfläche des ersten Leiters betragen, ein geringerer Strom fließt, wärmen sich diese nicht so stark auf und können als Kühlung für den ersten Leiter 10 dienen. Somit wird eine weitergehende Ausfallsicherheit des ersten Leiters 10 erreicht. In anderen Ausführungsformen kann das Material der Bereiche 18a, 18b des ersten Leiters 10 auch vollständig entfernt werden, falls eine Kühlung nicht gebraucht wird. Dadurch werden die Materialkosten des ersten Leiters 10 verringert.

In Fig. 3 wird ein Kontaktelement 32a, 32b gezeigt. Dabei kann jeweils ein Kontaktelement mit einer schwalbenschwanzartigen Befestigung in einer der Nuten 16a, 16b befestigt werden. In einer Ausführungsform kann das bzw. die Kontaktelemente 30a, 30b eine Vielzahl einzelner Kontaktabschnitte aufweisen, die jeweils einzeln federnd gelagert sein können. Die Kontaktelemente 30a, 30b weisen jeweils eine Kontaktelementkontaktfläche 32a, 32b auf, die mit der jeweiligen Kontaktfläche 16a, 16b des ersten Leiters 10 zusammenwirken, beziehungsweise an ihm befestigt sind. So wirkt die Kontaktelementkontaktfläche 32a mit der ersten Kontaktfläche 16a und die Kontaktelementkontaktfläche 32b mit der zweiten Kontaktfläche 16b zusammen.

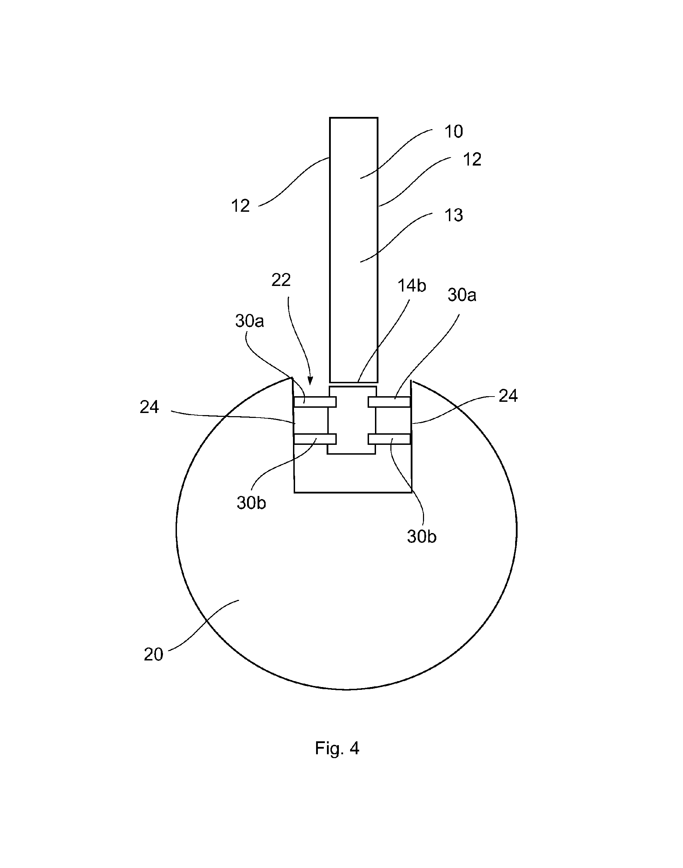

Fig. 4 zeigt eine Querschnittsansicht orthogonal zu der Längsachse Y des zweiten Leiters 20. Dort ist der erste Leiter 10 derart angeordnet, dass ein Strom zwischen dem zweiten Leiter 20 und dem Anschluss 7 der elektrischen Verbindungsanordnung 1 fließen kann. Der zweite Leiter 20 weist eine Nut 22 auf, in die der erste Leiter 10 hineingesenkt ist, so dass die seitlich an dem zweiten Leiter 10 angebrachten Kontaktelemente 30a, 30b die Seitenwände 24 der Nut 22 kontaktieren können. Durch einen Federmechanismus, der die Kontaktelemente auf die Seitenwände 24 drückt, kann zudem sichergestellt werden, dass eine zuverlässige elektrische Verbindung zwischen den Kontaktelementen 30a, 30b und dem zweiten Leiter 20 hergestellt wird.

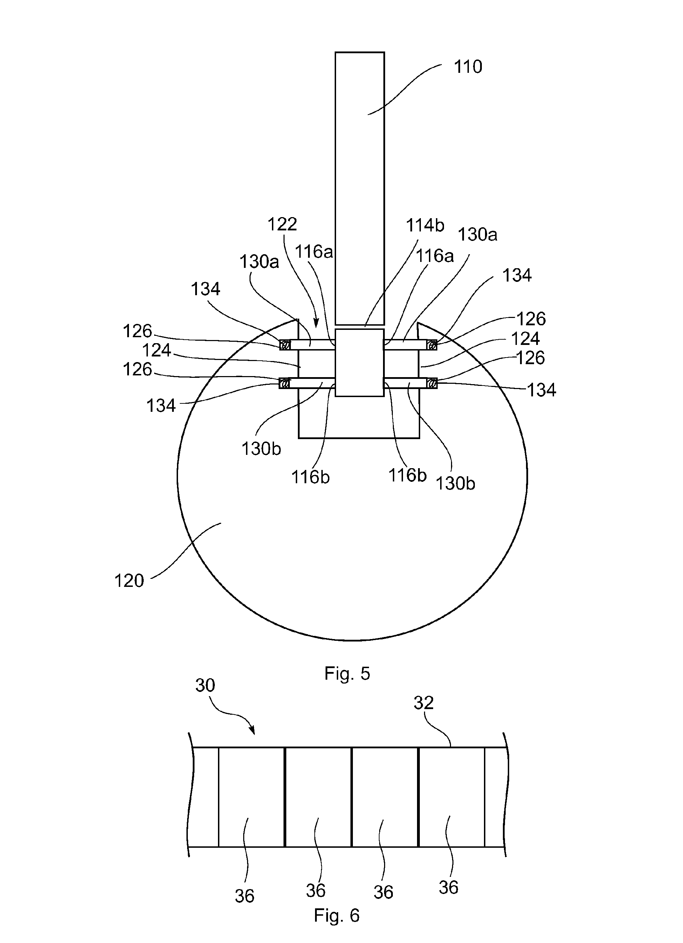

Obwohl die elektrische Verbindungsanordnung in Fig. 1 im Längsschnitt gezeigt ist, wurde zugunsten der Übersichtlichkeit auf eine Schraffur der geschnitten dargestellten Teile wie beispielsweise dem Gehäuse 3, den Isolatoren 5 und des zweiten Leiters 20 verzichtet. Entsprechend ist eine im zweiten Leiter durch die Nut 22 gebildete Kante in Fig. 1 als Konturlinie dargestellt. Eine entsprechende vereinfachte Darstellungsweise gilt beispielsweise auch für die Figuren 4 und 5.

Fig. 5 zeigt in Querschnittsansicht senkrecht zur Längsachse X des zweiten Leiters 120 eine weitere Ausführungsform einer elektrischen Verbindungsanordnung. Die in Fig. 5 gezeigten Bezugszeichen bezeichnen die gleichen Merkmale wie in den Figuren 1 bis 4 und sind um einhundert erhöht. Der erste Leiter 110 ist in eine Nut 122 eines zweiten Leiters 120 abgesenkt. In der Ausführungsform von Fig. 5 sind die Kontaktelemente im Gegensatz zu der Ausführungsform von Fig. 4 in dem zweiten Leiter 120 gelagert, insbesondere in Kontaktelementnuten 126 von den Seitenwänden 124 der Nut 122 des zweiten Leiters 120. Die Kontaktelemente 130a, 130b werden dabei durch Federelemente 134 in Richtung des ersten Leiters 110 gedrückt, wenn dessen Kontaktflächen 116a, 116b innerhalb der Nut 122 des zweiten Leiters 120 angeordnet sind.

Fig. 6 zeigt eine schematische Ansicht eines Kontaktelements 30. Wie in Fig. 6 gezeigt, können die Kontaktelemente 30a, 30b, 30 Einzelkontakte 36 aufweisen, die nebeneinander angeordnet sind und jeweils einzeln in Richtung der Kontaktelementkontaktfläche 32 bewegbar sein können. Somit wird ein möglichst flächiger Kontakt entlang der Kontaktfläche 16a, 16b, 116a, 116b an dem ersten Leiter und/oder zweiten Leiter bewirkt. Somit sind also die Einzelkontakte 36 entlang der Längsachse X nebeneinander angeordnet.

Mit den Schlitzen 14a, 14b, 114b wird erreicht, dass die Stromdichtenverteilung sowohl in den Kontaktelementen als auch in dem zweiten Leiter mit den Schlitzen gleichmäßiger ist. Zudem weisen die jeweils unteren Kontaktelement 30b, 130b in Figuren 4 und 5 bei einem geschlitzten ersten Leiter 10, 110 eine höhere Stromdichte auf als in einem ungeschlitzten Leiter 10, 120.

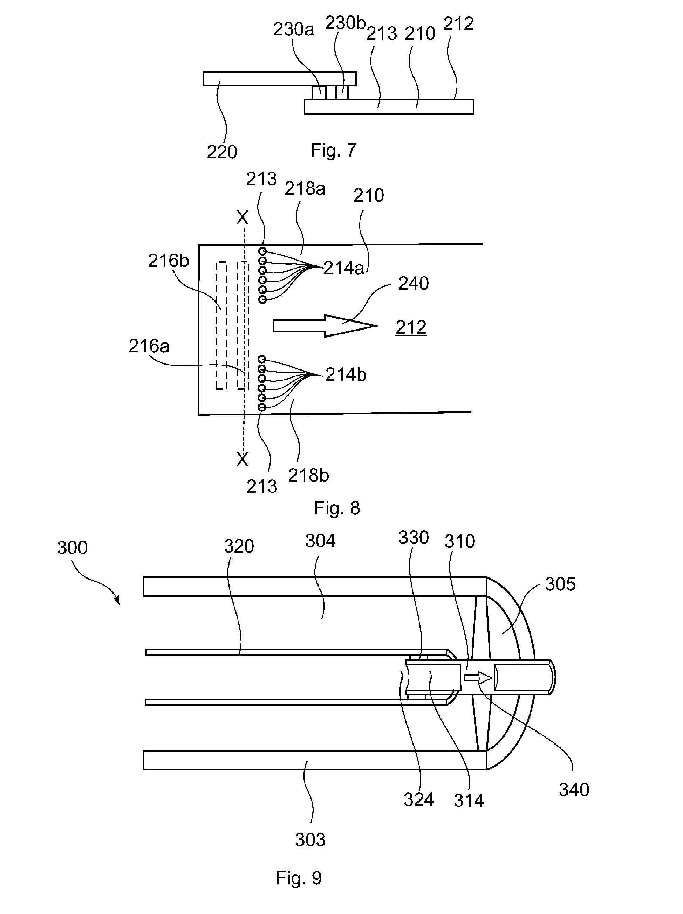

Fig. 7 zeigt eine Querschnittsansicht einer elektrischen Verbindungsanordnung zwischen einem ersten Flachleiter 210 und einem zweiten Flachleiter 220, die elektrisch über zwei Reihen von Kontaktelemente 230a, 230b elektrisch miteinander verbunden sind. Fig. 8 zeigt schematisch eine Draufsicht auf den ersten Flachleiter 210. Dabei können die Kontaktelemente 230a, 230b an dem zweiten Flachleiter 220 befestigt sein, insbesondere an dessen breiten Seite, und mit einer Kontaktfläche 216a, 216b an einer breiten Seite des ersten Flachleiters 210 zusammenwirken. In einer Ausführungsform stellt die VerbindungsAnordnung aus Fig. 7 und Fig. 8 eine permanente Verbindung dar. Die Kontaktflächen 216a, 216b weisen eine Längsachse X auf, die im Wesentlichen orthogonal zur Stromflussrichtung 240 in dem ersten Flachleiter 210 liegt. Die Kontaktflächen 216a, 216b auf dem ersten Flachleiter 210 sind jeweils auf der breiten Seite des Flachleiters angeordnet.

Ferner weist der erste Flachleiter jeweils eine Reihe von Löchern 214a, 214b auf, die sich von der schmalen Seite 213 des Flachleiters bei einer Draufsicht auf den ersten Flachleiter auf seine breiten Seite 212 in Richtung der Stromflussrichtung 240 erstrecken. Die Reihen sind dabei im Wesentlichen linear. Die Löcher 214a, 214b dienen zur Vergleichmäßigung der Stromverteilung in den Kontaktflächen 216a, 216b und unter den Kontaktflächen 216a, 216b. Dabei können die Löcher jeweils einer Reihe 214a, 214b einen regelmäßigen Abstand voneinander aufweisen. Bereiche, die von den Kontaktflächen aus gesehen hinter den Löchern 214a, 214b angeordnet sind, können dabei als Kühlbereiche 218a, 218b dienen, um eine Langlebigkeit des ersten Flachleiters 210 im Bereich des Kontakts zwischen dem ersten Flachleiter 210 und dem zweiten Flachleiter 220 zu erhöhen. In einer Ausführungsform kann der zweite Flachleiter ebenfalls mindestens ein Stromvergleichmäßigungsmittel aufweisen, um die Stromverteilung durch dessen Kontaktflächen zu vergleichmäßigen.

Fig. 9 zeigt einen schematischen Querschnitt einer gasisolierten Leitung 300 gemäß einer Ausführungsform. In einem Gehäuse 303 ist ein Stromleiter 320 angeordnet, der mit einem Kontaktträger 310 elektrisch verbunden ist. Der Stromleiter 320 ist beispielsweise ein hohlzylindrischer Leiter. Der Kontaktträger 310 ist in einem Isolierelement 305, beispielsweise einem Schottisolator, gelagert, das in einem Gehäuse 303 eines gasisolierten Leiters 300 angeordnet ist. Der Kontaktträger 310 dient zur Stützung des Stromleiters 320 in der Mitte des Gehäuses 303. Der Stromleiter kann beispielsweise zylinderförmig, insbesondere hohlzylindrisch, sein. Das Gehäuse 303 weist einen Innenraum 304 auf, das mit einem Isoliergas, beispielsweise SF₆, befüllt werden kann. Zwischen dem Stromleiter 320 und dem Kontaktträger 310 ist ein Kontaktelement 330 angeordnet, das beispielsweise ein Spiralkontaktelement sein kann. Um eine Vergleichmäßigung des Stroms durch das Kontaktelement 330 zu ermöglichen, kann der Stromleiter 320 oder der Kontaktträger 310 in der Nähe der Kontaktflächen des Kontaktelements 330 auf dem Kontaktträger 310 oder dem Stromleiter 320 mindestens ein Stromvergleichmäßigungsmittel in Form von (mindestens) einem Schlitz 314, einer Nut und/oder einer Bohrung aufweisen. Dabei erhöht der mindestens eine Schlitz, die mindestens eine Bohrung und/oder die mindestens eine Nut lokal den Widerstand, sodass der Stromfluss durch das Kontaktelement 330 beziehungsweise das Spiralkontaktelement 330 vergleichmäßigt wird. Dabei sind die Bohrungen und/oder die Nut und/oder der Schlitz im Wesentlichen senkrecht zu einer Stromflussrichtung 340 angeordnet, die im Wesentlichen der Axialrichtung des Kontaktträgers beziehungsweise des Stromleiters entspricht. Ferner kann auch der Stromleiter 320 einen Schlitz 324 zur Vergleichmäßigung der Stromverteilung aufweisen, der im Wesentlichen senkrecht zu der Stromflussrichtung 340 angeordnet ist.

Der Kontaktträger 310 kann beispielsweise auch hohlzylindrisch sein und eine Trennwand aufweisen, so dass Isoliergas nicht durch den Kontaktträger in eine weitere Kammer eines gasisolierten Schalters oder Leitung dringen kann.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Elektrische Verbindungsanordnung für ein Stromverteilungssystem einer Hoch- oder Mittelspannungsanlage, umfassend
einen ersten Leiter (10, 110, 210, 310),
einen zweiten Leiter (20, 120, 220, 320), und
mindestens ein Kontaktelement (30, 30a, 30b, 130a, 130b, 330) zum Verbinden des ersten Leiters mit dem zweiten Leiter, wobei das mindestens eine Kontaktelement jeweils eine erste Kontaktfläche (32a, 32b) aufweist, die in Kontakt mit dem ersten Leiter (10, 110, 210, 310) bringbar ist oder steht, um einen Stromfluss zwischen dem ersten Leiter und dem zweiten Leiter zu ermöglichen, wobei
der erste Leiter mindestens ein Stromvergleichmäßigungsmittel (14a, 14b, 114b, 214a, 214b, 314) aufweist, das derart ausgebildet ist, dass die Stromverteilung beim Stromfluss in einem Querschnitt der elektrischen Verbindungsanordnung keine kritische Stromdichtespitze aufweist.

2. Elektrische Verbindungsanordnung nach Anspruch 1, wobei der Querschnitt mit der vergleichmäßigten Stromdichte bei der ersten Kontaktfläche (32a, 32b) angeordnet ist und sich die Stromdichten entlang der Kontaktfläche um weniger als den Faktor 10, insbesondere weniger als den Faktor 5, von einer mittleren Stromdichte entlang der Kontaktfläche unterscheiden, insbesondere bei einem Betriebsstrom von mindestens 1000 Ampere und/oder bei einem Kurzschluss von mindestens 10kA.

3. Elektrische Verbindungsanordnung nach Anspruch 1 oder 2, wobei die kritischen Stromdichtespitzen Stromdichtespitzen sind, die zu einer Verformung der Verbindungsanordnung führen und/oder
orthogonal zur Stromflussrichtung und/oder parallel zu einer Längsachse (X) der Kontaktfläche der Leiterquerschnitt des ersten Leiters zur Vergleichmäßigung des Stromflusses geringer ist als die Ausdehnung der Kontaktfläche.

4. Elektrische Verbindungsanordnung nach einem der vorangehenden Ansprüche, wobei das mindestens eine Stromvergleichmäßigungsmittel eines oder mehrere Elemente umfaßt, die aus der folgenden Liste ausgewählt sind: ein Schlitz, eine Nut, eine Perforation, ein Loch, und eine Taillierung, und wobei das mindestens eine Stromvergleichmäßigungsmittel, insbesondere dessen Längsachse, im Wesentlichen quer zur Stromflussrichtung im ersten Leiter angeordnet ist.

5. Elektrische Verbindungsanordnung nach einem der vorangehenden Ansprüche, wobei der erste Leiter mindestens eine zweite Kontaktfläche (16a, 16b, 116a, 116b, 216a, 216b) aufweist, die jeweils in Kontakt mit der mindestens einen ersten Kontaktfläche (32a, 32b) bringbar ist oder steht, wobei das mindestens eine Stromvergleichmäßigungsmittel in einer Wirkentfernung zu der zweiten Kontaktfläche angeordnet ist, die eine Veränderung der Stromdichte entlang der Kontaktfläche bewirkt, wobei insbesondere die Wirkentfernung weniger als 25 mm beträgt, insbesondere weniger als 10 mm beträgt.

6. Elektrische Verbindungsanordnung nach einem der vorangehenden Ansprüche, wobei der erste Leiter mindestens eine zweite Kontaktfläche (16a, 16b, 116a, 116b, 216a, 216b) aufweist, die jeweils in Kontakt mit der mindestens einen ersten Kontaktfläche (32a, 32b) bringbar ist oder steht, wobei die mindestens eine zweite Kontaktfläche eine Längserstreckung aufweist, wobei das mindestens eine Stromvergleichmäßigungsmittel (14a, 14b, 114b, 214a, 214b) parallel zur Längserstreckung der mindestens einen zweiten Kontaktfläche angeordnet ist.

7. Elektrische Verbindungsanordnung nach Anspruch 6, wobei
in Richtung der Längsachse der mindestens einen zweiten Kontaktfläche das mindestens eine Stromvergleichmäßigungsmittel (14a, 14b, 114b, 214a, 214b, 314) eine Länge von mindestens 10% der Längserstreckung der jeweiligen mindestens einen Kontaktfläche aufweist, insbesondere mehr als 30% der Längserstreckung aufweist.

8. Elektrische Verbindungsanordnung nach einem der vorangehenden Ansprüche, wobei die mindestens eine erste und/oder zweite Kontaktfläche (16a, 16b, 32a, 32b, 116a, 116b, 216a, 216b) mindestens ein Seitenverhältnis von 3:1, insbesondere mindestens ein Seitenverhältnis von 6:1 aufweist.

9. Elektrische Verbindungsanordnung nach einem der vorangehenden Ansprüche, wobei das mindestens eine Kontaktelement (30, 30a, 30b, 130a, 130b, 330) eine Vielzahl von aneinander angrenzenden Einzelkontakten (36) aufweist, insbesondere in Richtung der Längsachse (X) der ersten und/oder zweiten Kontaktfläche.

10. Elektrische Verbindungsanordnung nach einem der vorangehenden Ansprüche, wobei ein Strompfad von dem ersten Leiter in das mindestens eine Kontaktelement in einem Winkel erfolgt, wobei der Winkel zwischen dem Strompfad im ersten Leiter und dem Strompfad im mindestens einen Kontaktelement jeweils zwischen 50 und 130 Grad, insbesondere zwischen 55 und 115 Grad liegt, beispielsweise zwischen 80 und 100 Grad liegt.

11. Elektrische Verbindungsanordnung nach einem der vorangehenden Ansprüche, wobei das mindestens eine Kontaktelement jeweils eine dritte Kontaktfläche aufweist, die in Kontakt mit dem zweiten Leiter bringbar ist oder steht, um einen Stromfluss zwischen dem ersten Leiter und dem zweiten Leiter zu ermöglichen, wobei der zweite Leiter mindestens ein Stromvergleichmäßigungsmittel (324) aufweist, das derart geformt ist, dass eine Stromdichte durch das Kontaktelement entlang der dritten Kontaktfläche vergleichmäßigt ist, und wobei das Stromvergleichmäßigungsmittel im zweiten Leiter insbesondere gemäß dem Stromverteilungsmittel im ersten Leiter nach einem der Ansprüche 2 bis 10 ausgebildet ist.

12. Elektrische Verbindungsanordnung nach einem der vorangehenden Ansprüche, wobei der erste Leiter (10, 110, 210) und/oder der zweite Leiter ein Flachleiter ist.

13. Elektrische Verbindungsanordnung nach einem der vorangehenden Ansprüche, wobei die elektrische Verbindungsanordnung ein schaltendes Element ist, derart ausgestaltet, dass eine elektrische Verbindung zwischen dem ersten Leiter (10, 110, 210) und dem zweiten Leiter (20, 120, 220) unterbrechbar ist.

14. Elektrische Verbindungsanordnung nach Anspruch 13, wobei der erste Leiter (10, 110, 210) zwischen einer ersten Position, in der er nicht in elektrischer Verbindung mit dem zweiten Leiter (20, 120, 220) steht, und einer zweiten Position, in der er über das Kontaktelement mit dem zweiten Leiter in elektrischer Verbindung steht, bewegbar ist.

15. Elektrische Verbindungsanordnung nach einem der vorangehenden Ansprüche, wobei der erste Leiter, der zweite Leiter, und das mindestens eine Kontaktelement in einem Gehäuse (3), insbesondere einem leitendem Gehäuse, angeordnet sind, das ein Innenvolumen bereitstellt, das insbesondere mit einem Isoliergas befüllbar ist.
